# EUROPEAN PATENT APPLICATION

(11) **EP 4 224 347 A1**
(43) Date of publication of application: **09.08.2023**
(21) Application number: 20956246.1
(22) Date of filing: 30.09.2020
(51) Int. Cl.: G06F 21/60, G06Q 50/10

(54) **CONTROL METHOD, INFORMATION PROCESSING DEVICE, CONTROL PROGRAM, AND INFORMATION PROCESSING SYSTEM**

(71) Applicant: FUJITSU LIMITED, Kawasaki-shi, Kanagawa 211-8588 (JP)
(72) Inventor: YASAKI, Koichi, Kawasaki-shi, Kanagawa 211-8588 (JP); YAMAMOTO, Dai, Kawasaki-shi, Kanagawa 211-8588 (JP); NAKAMURA, Yosuke, Kawasaki-shi, Kanagawa 211-8588 (JP); TSUNODA, Tadanobu, Kawasaki-shi, Kanagawa 211-8588 (JP); KOJIMA, Rikuhiro, Kawasaki-shi, Kanagawa 211-8588 (JP); NIMURA, Kazuaki, Kawasaki-shi, Kanagawa 211-8588 (JP)
(74) Representative: Hoffmann Eitle
(86) International application number: PCT/JP2020/037182
(87) International publication number: WO 2022/070318

(57) **Abstract**

An information processing system includes a first storage that stores data, a second storage that is isolated from the first storage, a first information processing device that is accessible to the data stored in the first storage, and a second information processing device that manages the second storage. When receiving a request for the second storage that is an isolation destination from the first information processing device, the second information processing device notifies the first information processing device of the second storage that is the isolation destination. When receiving designation of data permitted to be accessed by a specific service, among the data stored in the first storage, the first information processing device outputs an instruction to store the designated data in the second storage that is the isolation destination notified from the second information processing device. An information leakage risk due to the specific service is reduced.

## Description

### FIELD

The present invention relates to a control method, an information processing device, a control program, and an information processing system.

### BACKGROUND

In recent years, for example, a large number of companies including large companies and small companies have adopted an online storage (cloud storage). Furthermore, a linkage service that can link the online storage with a specific service of another company such as an electronic signature has been widespread.

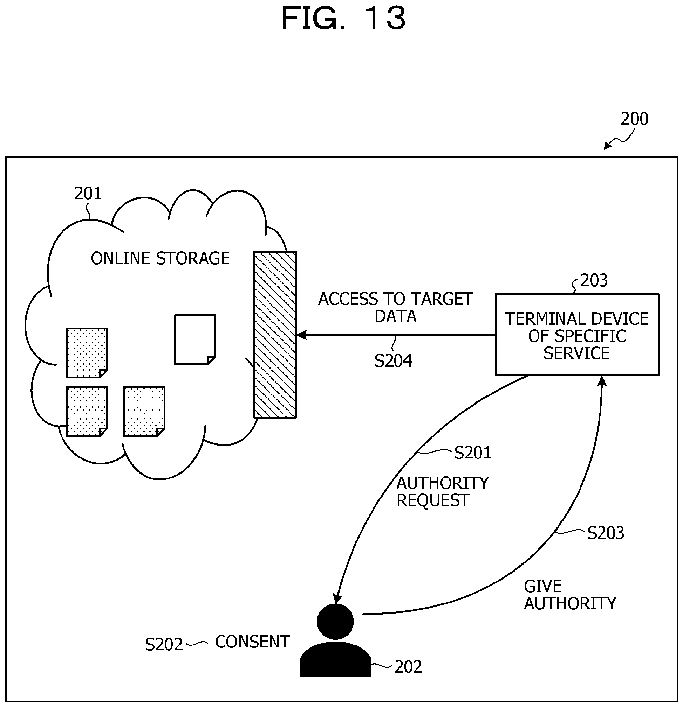

FIG. 13 is an explanatory diagram illustrating an example of an operation of an entire information processing system 200 related to a typical linkage service. The information processing system 200 illustrated in FIG. 13 includes an online storage 201, an information processing device 202 of a user, and a terminal device 203 of a specific service. It is assumed that the online storage 201 store data generated by the information processing device 202 of the user. In a case where an authority request to target data is detected from the terminal device 203 of the specific service (step S201), the information processing device 202 of the user detects a consent operation in a case where the authority request to the target data can be consented (step S202). Note that the consent operation is a user's operation for consenting the authority request to permit an access to the target data by the specific service, among a plurality of pieces of data in the online storage 201. In a case of detecting the consent operation, the information processing device 202 of the user transmits an access authority to the target data to the terminal device 203 of the specific service (step S203).

In a case of detecting that the access authority is given from the information processing device 202 of the user, the terminal device 203 of the specific service accesses the target data in the online storage 201. Then, after processing the data, the terminal device 203 can rewrite the processed data into the online storage 201.

That is, in the linkage service, after processing the data placed in the online storage 201 by the terminal device 203 of the specific service under consent of the user related to the data placed in the online storage 201, it is possible to rewrite the processed data into the online storage 201.

The user designates data permitted to be accessed from the terminal device 203 of the specific service, among the data placed in the online storage 201 and notifies the terminal device 203 of the specific service of the designation range as consented access authority. The consented access authority largely depends on determination of an individual user, and whether or not the user gives an unintended access authority to the terminal device 203 of the specific service largely depends on literacy of the user.

### SUMMARY

### TECHNICAL PROBLEM

In the information processing system 200 related to a typical linkage service, if a user gives an access authority more than necessary to a specific service, an access to data consented by the user from the specific service and an access to data that is not consented are enabled. As a result, information leakage due to the specific service is caused. Therefore, depending of a company to which the user belongs, there are some companies that prohibit a linkage service between the specific service and the online storage.

One aspect is to provide a control method or the like that can reduce a risk of information leakage due to a specific service.

### SOLUTION TO PROBLEM

According to one aspect of a control method, upon receiving designation of data that is permitted to be accessed by a specific service among data stored in a first storage, a computer executes processing for outputting an instruction to store the designated data in a second storage isolated from the first storage to the first storage.

### ADVANTAGEOUS EFFECTS OF INVENTION

According to one aspect, a risk of information leakage due to a specific service can be reduced.

### BRIEF DESCRIPTION OF DRAWINGS

FIG. 1 is an explanatory diagram illustrating an example of an information processing system with a linkage service according to the present embodiment.
FIG. 2 is a block diagram illustrating an example of a first information processing device.
FIG. 3 is a block diagram illustrating an example of a second information processing device.
FIG. 4 is an explanatory diagram illustrating an example of an online storage.
FIG. 5 is an explanatory diagram illustrating an example of a processing operation when an authority is consented to a specific service.
FIG. 6 is an explanatory diagram illustrating an example of an operation of an entire information processing system.
FIG. 7 is a sequence diagram illustrating an example of a processing operation related to data movement processing of the entire information processing system.
FIG. 8 (i.e., FIGs. 8A and 8B) is a flowchart illustrating an example of a processing operation of an agent related to agent processing.
FIG. 9 is a flowchart illustrating an example of a processing operation of a manager related to manager processing.
FIG. 10 is a flowchart illustrating an example of a processing operation of a storage manager related to movement processing.
FIG. 11 is an explanatory diagram illustrating an example of an operation of an entire information processing system according to another embodiment.
FIG. 12 is an explanatory diagram illustrating an example of a computer for executing a control program.
FIG. 13 is an explanatory diagram illustrating an example of an operation of an entire information processing system with a typical linkage service.

### DESCRIPTION OF EMBODIMENTS

Hereinafter, an embodiment of a control method or the like disclosed in the present application will be described in detail with reference to the drawings. Note that the disclosed technology is not limited to each embodiment. Furthermore, each embodiment to be described below may also be combined as appropriate, without causing inconsistency.

### [Embodiment]

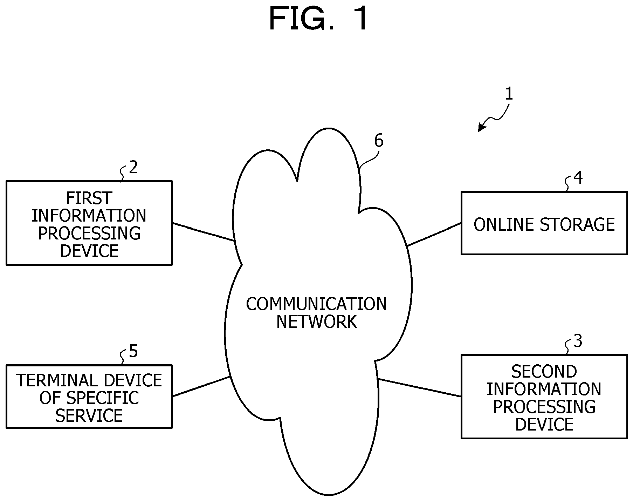

FIG. 1 is an explanatory diagram illustrating an example of an information processing system 1 with a linkage service according to the present embodiment. The information processing system 1 with the linkage service is a system in which a terminal device 5 of a specific service such as an electronic signature can access data placed in an online storage 4 under consent of a user regarding the data placed in the online storage 4. The information processing system 1 illustrated in FIG. 1 includes a first information processing device 2, a second information processing device 3, the online storage 4, the terminal device 5 of the specific service, and a communication network 6. The first information processing device 2 is, for example, an information processing device that is used by a user of a smartphone terminal, a tablet terminal, a personal computer, or the like. The second information processing device 3 is an information processing device, for example, a server device or the like that manages the online storage 4. The online storage 4 is, for example, a cloud storage that stores data generated by the first information processing device 2 on the cloud, for example. The terminal device 5 of the specific service is a terminal device on a specific service side that provides an electronic signature service or the like that processes data such as documents, for example, an electronic signature service for applying an electronic signature. The specific service includes, for example, various services such as translation, OCR, or a character string retrieval service, in addition to the electronic signature. The communication network 6 is a communication network, for example, the Internet, a local area network (LAN), or the like that performs mutual communication coupling between the first information processing device 2, the second information processing device 3, the online storage 4, and a terminal device 5 of a service of another company.

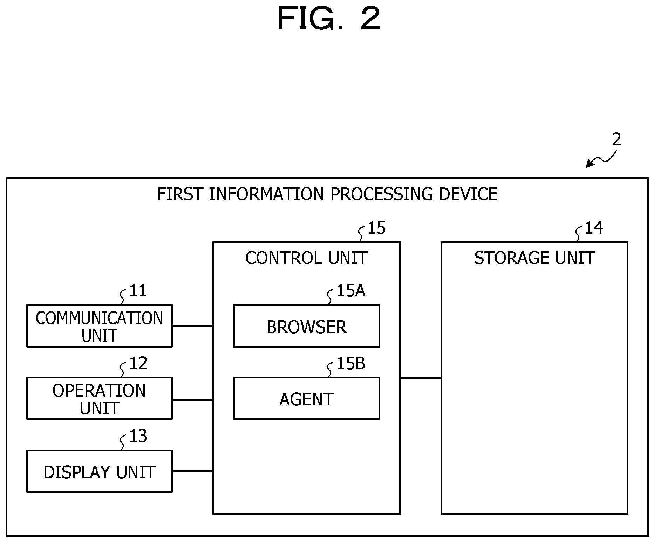

FIG. 2 is a block diagram illustrating an example of the first information processing device 2. The first information processing device 2 illustrated in FIG. 2 includes a communication unit 11, an operation unit 12, a display unit 13, a storage unit 14, and a control unit 15. The communication unit 11 is a communication interface that communicates with the communication network 6. The operation unit 12 is an input interface that inputs various commands or the like. The display unit 13 is an output interface that displays various types of information. The storage unit 14 is a region where various types of information is stored. The control unit 15 is, for example, a central processing unit (CPU), a processor, or the like that controls the entire first information processing device 2.

The control unit 15 reads a program being stored in the storage unit 14 and executes a process as a function based on the read program. The control unit 15 includes a browser 15A and an agent 15B as the functions. The browser 15A is, for example, an application function for accessing data in the online storage 4. The agent 15B is an application function on the user's side that communicates with the online storage 4 or the second information processing device 3.

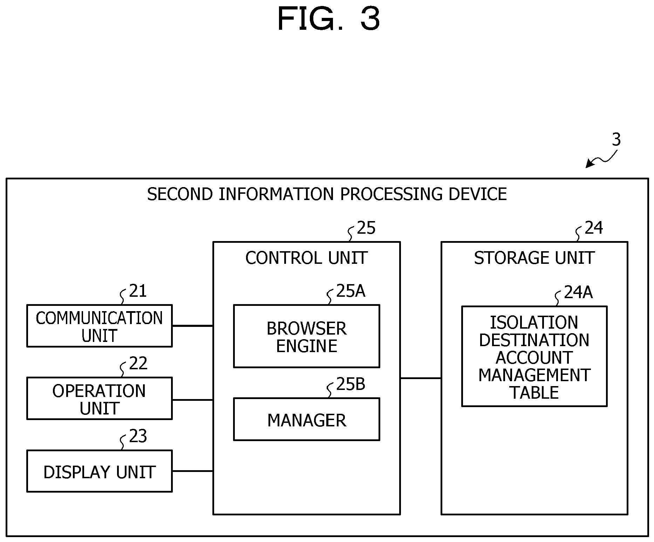

FIG. 3 is a block diagram illustrating an example of the second information processing device 3. The second information processing device 3 illustrated in FIG. 3 includes a communication unit 21, an operation unit 22, a display unit 23, a storage unit 24, and a control unit 25. The communication unit 21 is a communication interface that communicates with the communication network 6. The operation unit 22 is an input interface that inputs various commands or the like. The display unit 23 is an output interface that displays various types of information. The storage unit 24 is a region where various types of information is stored. The control unit 25 is, for example, a CPU, a processor, or the like that controls the entire second information processing device 3.

The storage unit 24 stores an isolation destination account management table 24A. The isolation destination account management table 24A is a table used to manage each account ID for identifying an isolation destination account in association with a data ID for identifying data stored in a second storage 42A corresponding to the isolation destination account. The isolation destination account is an account that is temporarily allocated on the online storage 4. Note that, although a predetermined number of the isolation destination accounts are prepared in advance, the isolation destination account may be generated each time.

The control unit 25 reads a program being stored in the storage unit 24 and executes a process as a function based on the read program. The control unit 25 includes a browser engine 25A and a manager 25B as the functions. The browser engine 25A is included for each second storage 42A of the isolation destination account to be described later in the online storage 4 and is an application function for monitoring the second storage 42A. The manager 25B is an application function on a side of the server that manages the browser engine 25A and communicates with the agent 15B in the first information processing device 2.

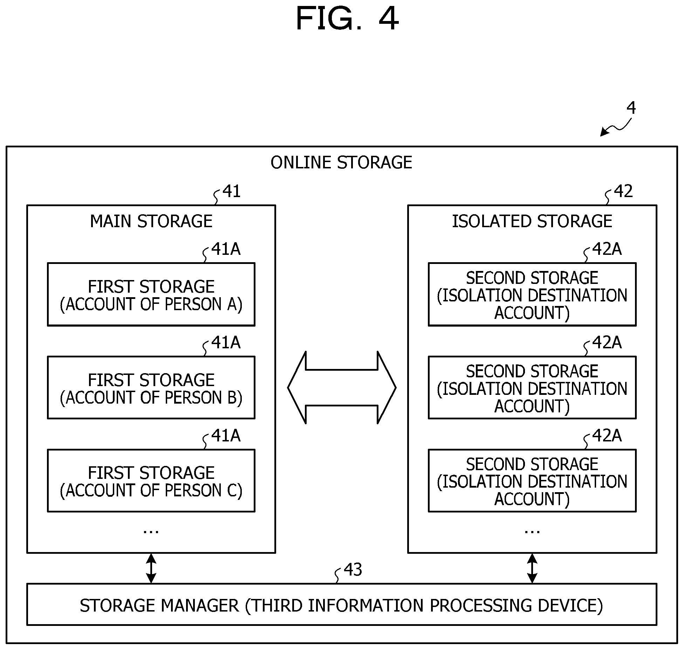

FIG. 4 is an explanatory diagram illustrating an example of the online storage 4. The online storage 4 illustrated in FIG. 4 includes a main storage 41, an isolated storage 42, and a storage manager 43. The main storage 41 includes, for example, a first storage 41A allocated for each account of a user of the first information processing device 2. The first storage 41A is a region where data generated by the first information processing device 2 of the user is stored. The isolated storage 42 includes the second storage 42A allocated for each isolation destination account. The second storage 42A is an isolation destination region where data to which an access authority is given to a specific service by the user is stored, among a plurality of pieces of data in the main storage 41. The storage manager 43 is a third information processing device that manages the online storage 4 and controls the main storage 41 and the isolated storage 42. The storage manager 43 moves target data being stored in the first storage 41A in the main storage 41 to the second storage 42A in the isolated storage 42, in response to a target data moving instruction from the agent 15B.

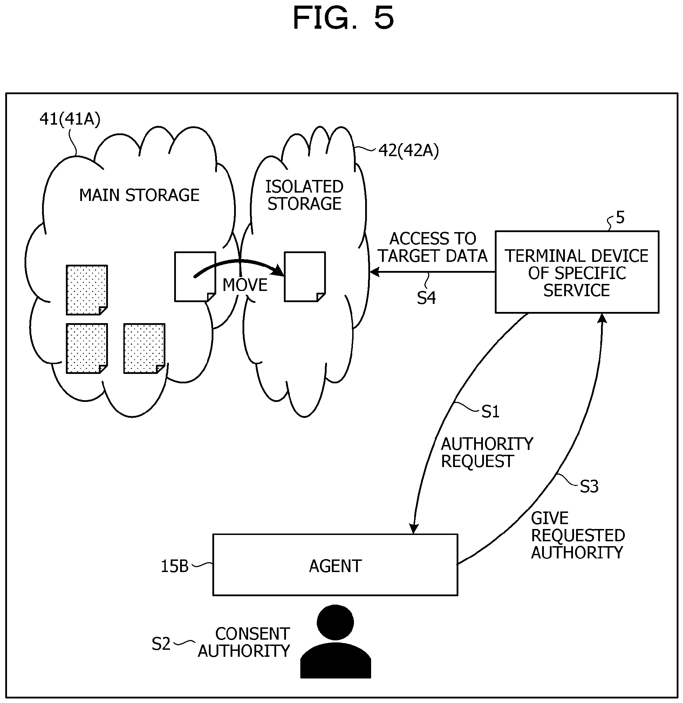

FIG. 5 is an explanatory diagram illustrating an example of a processing operation when an authority is consented to a specific service. Note that it is assumed that the agent 15B move target data that is permitted to be accessed by the terminal device 5 of the specific service from the first storage 41A in the main storage 41 to the second storage 42A in the isolated storage 42 and store the target data in the second storage 42A.

The terminal device 5 of the specific service transmits an authority request to the agent 15B (step S1). Note that the authority request is a command for requesting an access authority to data stored in the online storage 4. In a case of detecting an authority consent operation of the user for the authority request (step S2), the agent 15B gives an access authority of the target data to the terminal device 5 of the specific service (step S3). The authority consent operation is an operation for designating the target data for which the user has consented the authority to be accessed from the terminal device 5 of the specific service, among the data being stored in the second storage 42A. It is assumed that the access authority depends on literacy of the user and the access authority include a data ID used to identify the target data consented by the user. As a result, the terminal device 5 of the specific service can access the target data being stored in the isolated storage 42, not the main storage 41, based on the data ID in the access authority.

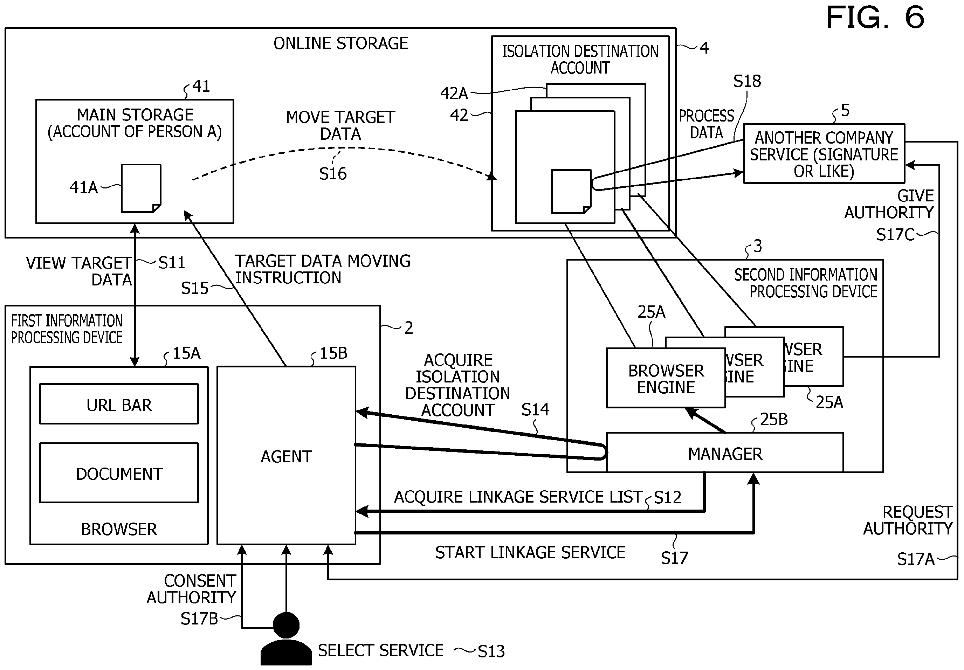

FIG. 6 is an explanatory diagram illustrating an example of an operation of the entire information processing system 1. In a case where a URL of a target data storage destination is input to a URL bar, the browser 15A in the first information processing device 2 notifies the storage manager 43 of a target data viewing request (step S11). The URL of the storage destination is, for example, a URL where data to be viewed in the first storage 41A corresponding to an account of the user in the online storage 4 is stored. In a case of detecting the target data viewing request from the browser 15A, the storage manager 43 transmits the target data being stored in the first storage 41A in the main storage 41 to the first information processing device 2. As a result, in a case of detecting the target data to be viewed from the storage manager 43, the browser 15A in the first information processing device 2 displays the target data on the display unit 13.

In a case of acquiring a linkage service list from the manager 25B while the target data is displayed (step S12), the agent 15B in the first information processing device 2 displays the linkage service list on the display unit 13. Note that the linkage service list is a list of services that can be linked to the online storage 4. Moreover, in a case of detecting a desired service selection operation from the displayed linkage service list (step S13), the agent 15B acquires an isolation destination account from the manager 25B (step S14). Note that the isolation destination account is an account corresponding to the second storage 42A in the isolated storage 42 that is a target data movement destination.

In a case of acquiring the isolation destination account, the agent 15B notifies the storage manager 43 of a moving instruction to move the target data being stored in the first storage 41A in the main storage 41 to the second storage 42A corresponding to the isolation destination account (step S15). In a case of detecting the moving instruction, the storage manager 43 moves the target data being stored in the first storage 41A in the main storage 41 to the second storage 42A corresponding to the isolation destination account in the isolated storage 42 (step S16). The second storage 42A stores the target data.

In a case of detecting an authority request for the target data from the terminal device 5 of the specific service (step S17A), the agent 15B displays the authority request from the specific service on the display unit 13. As a result, the user can recognize the authority request from the terminal device 5 of the specific service as looking at displayed content. In a case of detecting an authority consent operation by the user in response to the authority request (step S17B), the agent 15B notifies the manager 25B of start of the linkage service with the specific service (step S17). In a case of detecting the start of the linkage service, the manager 25B gives the access authority of the target data to the terminal device 5 of the specific service through the browser engine 25A (step S17C). Note that it is assumed that the access authority include the data ID used to identify the target data consented by the user.

In a case of detecting that the access authority is given, the terminal device 5 of the specific service can read the target data being stored in the second storage 42A in the isolated storage 42 based on the data ID in the access authority and process the read target data (step S18). Then, the terminal device 5 of the specific service can rewrite the processed data in the second storage 42A.

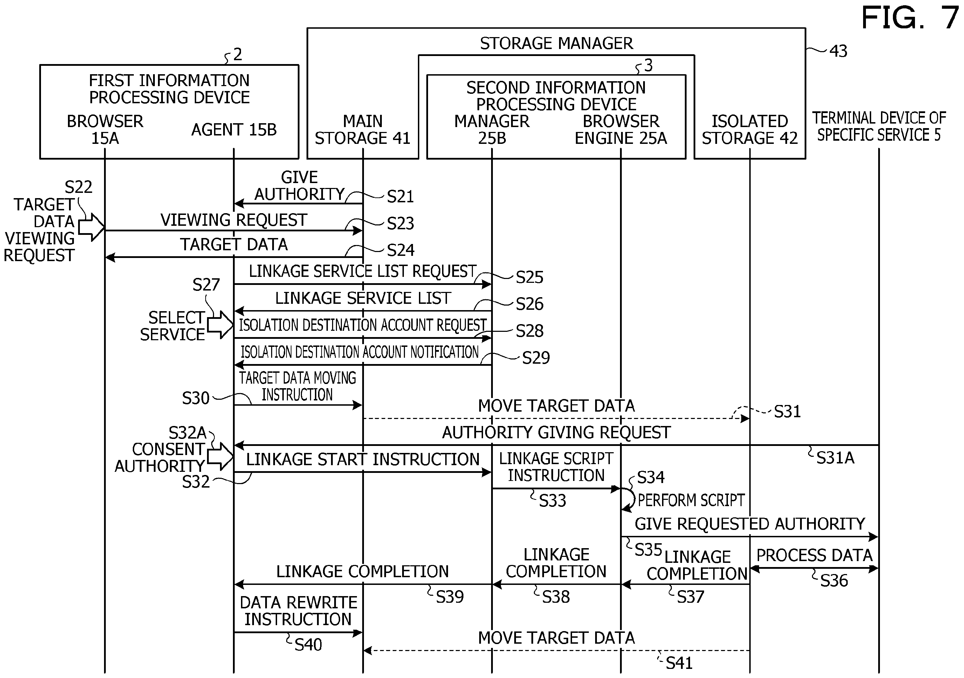

FIG. 7 is a sequence diagram illustrating an example of a processing operation related to data movement processing of the entire information processing system 1. In FIG. 7, the agent 15B in the first information processing device 2 detects that the authorization of the main storage 41 is given from the storage manager 43 (step S21). As a result, the first information processing device 2 can view the data of the first storage 41A corresponding to the account of the user in the main storage 41. In a case of detecting the target data viewing request by the user (step S22), the browser 15A in the first information processing device 2 notifies the storage manager 43 of the viewing request including the data ID used to identify the target data (step S23). In a case of detecting the viewing request, the storage manager 43 reads target data to be viewed corresponding to the data ID in the viewing request from the main storage 41 and transmits the read target data to the browser 15A (step S24). As a result, the browser 15A in the first information processing device 2 displays the target data on the display unit 13.

The agent 15B in the first information processing device 2 notifies the manager 25B in the second information processing device 3 of a linkage service list request while the target data is displayed (step S25). The manager 25B notifies the agent 15B of a linkage service list in response to the linkage service list request (step S26). As a result, in a case of detecting the linkage service list, the first information processing device 2 displays the linkage service list on the display unit 13.

In a case where the user detects a desired service selection operation from the linkage service list (step S27), the agent 15B notifies the manager 25B of an isolation destination account request (step S28). In a case of detecting the isolation destination account request, the manager 25B notifies the agent 15B of an isolation destination account storing the target data permitted by the user (step S29).

In a case of detecting the isolation destination account, the agent 15B notifies the storage manager 43 of a moving instruction to move the target data being stored in the first storage 41A to the second storage 42A corresponding to the isolation destination account (step S30). In a case of detecting the moving instruction from the agent 15B, the storage manager 43 extracts a data ID and an isolation destination account of the target data in the moving instruction. The storage manager 43 moves the target data stored in the first storage 41A in the main storage 41 to the second storage 42A that is an isolation destination, based on the data ID and the isolation destination account (step S31).

In a case of detecting an authority request from the terminal device 5 of the specific service (step S31A), the agent 15B displays the authority request on the display unit 13. Note that the authority request is information including service content to be authorized, an authority requester, or the like. In a case of detecting an authority consent operation of the user (step S31B), the agent 15B notifies the manager 25B of a linkage start instruction (step S32). In a case of detecting the linkage start instruction, the agent 15B notifies the browser engine 25A for managing the second storage 42A that is an isolation destination where the target data is stored, of a linkage script instruction (step S33). In a case of detecting the linkage script instruction, the browser engine 25A performs a linkage script that enables the terminal device 5 of the specific service to access the target data being stored in the second storage 42A from the access to the target data (step S34).

In a case of performing the linkage script, the browser engine 25A gives an access authority to the target data being stored in the second storage 42A that is the isolation destination to the terminal device 5 of the specific service (step S35). In a case of detecting that the access authority is given, the terminal device 5 of the specific service reads the target data being stored in the second storage 42A that is the isolation destination and processes the read target data (step S36). Then, the terminal device 5 of the specific service rewrites the processed target data into the second storage 42A that is the isolation destination.

When detecting that the target data is rewritten into the second storage 42A that is the isolation destination, the storage manager 43 notifies the browser engine 25A that manages the second storage 42A that is the isolation destination of the target data of linkage completion (step S37). In a case of detecting the linkage completion from the second storage 42A that is the isolation destination, the browser engine 25A notifies the manager 25B of the linkage completion of the target data (step S38).

In a case of detecting the linkage completion, the manager 25B notifies the agent 15B of the linkage completion (step S39). In a case of detecting the linkage completion, the agent 15B notifies the storage manager 43 of a target data rewrite instruction (step S40). Note that the rewrite instruction includes the data ID of the target data, the isolation destination account corresponding to the second storage 42A that is the isolation destination of the target data, the account corresponding to the first storage 41A that is an isolation source of the target data, or the like.

In a case of detecting the rewrite instruction, the storage manager 43 extracts the data ID, the isolation destination account, and the isolation source account of the target data in the rewrite instruction. The storage manager 43 moves the processed target data from the second storage 42A in the isolation destination account to the first storage 41A in the isolation source account of the main storage 41, based on the data ID, the isolation destination account, and the isolation source account (step S41). Then, the storage manager 43 ends the processing operation illustrated in FIG. 7. As a result, the storage manager 43 can return the processed target data stored in the second storage 42A that is the isolation destination to the first storage 41A that is the isolation source.

When detecting the isolation destination account request from the agent 15B, the manager 25B selects a free isolation destination account, and notifies the agent 15B of the isolation destination account including the free isolation destination account. As a result, the agent 15B can obtain the second storage 42A corresponding to the isolation destination account used as the isolation destination of the target data.

In a case of detecting the moving instruction including the isolation destination account and the data ID of the target data from the agent 15B, the storage manager 43 reads the target data being stored in the first storage 41A, based on the data ID. The storage manager 43 moves the read target data to the second storage 42A corresponding to the isolation destination account. As a result, the agent 15B can store the target data in the second storage 42A that is accessible to the terminal device 5 of the specific service.

The terminal device 5 of the specific service reads the target data being stored in the accessible second storage 42A that stores the target data to which the access authority is given, processes the read target data, and rewrites the processed target data into the second storage 42A. As a result, since the user of the first information processing device 2 limits a range that can be accessed from the terminal device 5 of the specific service to the second storage 42A that stores the target data to which the access authority is given, a risk of information leakage by the terminal device 5 of the specific service can be reduced.

In a case of detecting the linkage completion, the agent 15B notifies the storage manager 43 of the rewrite instruction including the data ID, the isolation destination account, and the isolation source account of linkage completion target data. The storage manager 43 reads the target data from the second storage 42A corresponding to the isolation destination account in the rewrite instruction and rewrites the read target data into the first storage 41A corresponding to the isolation source account. As a result, by rewriting the target data being stored into the second storage 42A in the first storage 41A after the linkage completion, it is possible to prevent the target data from being accessed again by the terminal device 5 of the specific service after the linkage completion and reduce the risk of the information leakage by the terminal device 5.

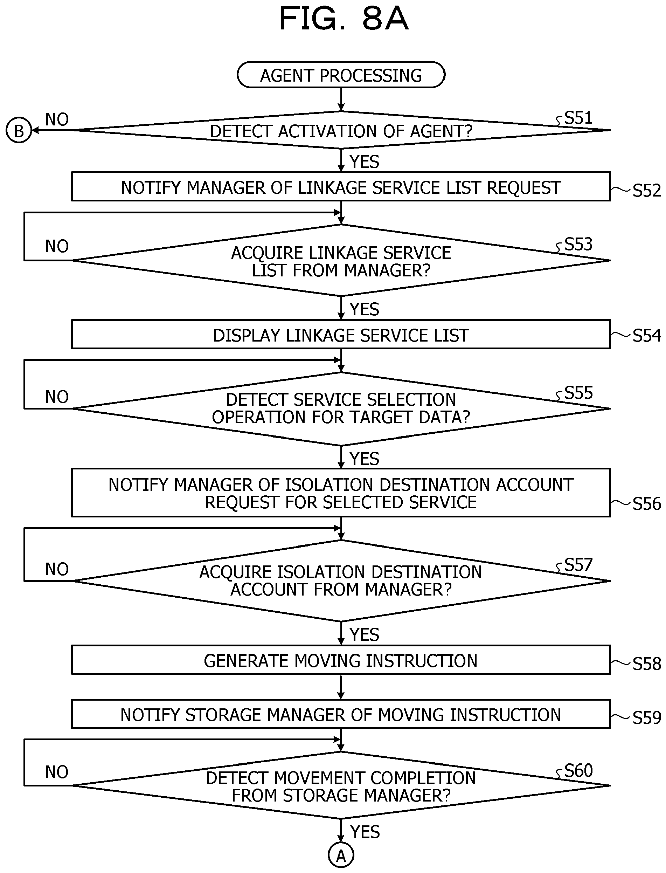

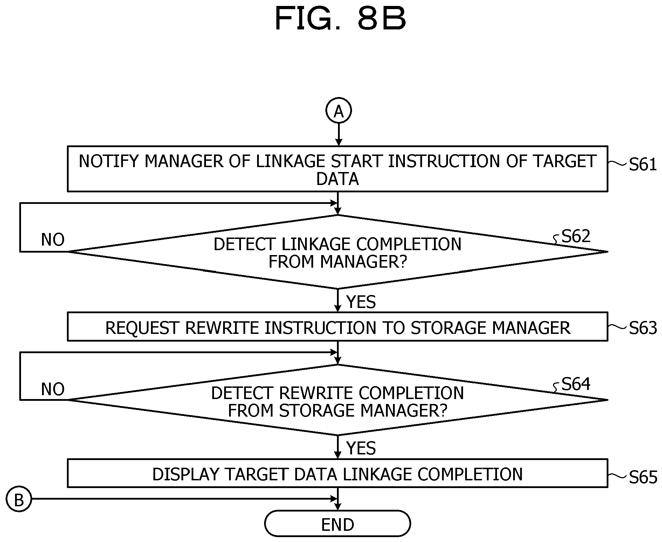

FIG. 8 (i.e., FIGs. 8A and 8B) is a flowchart illustrating an example of a processing operation of the agent 15B related to agent processing. In FIG. 8, the agent 15B determines whether or not activation is detected (step S51). Note that the activation is, for example, activation of the agent 15B in response to power supply start of the first information processing device 2 or an activation start operation of the agent 15B. In a case of detecting the activation (step S51: Yes), the agent 15B notifies the manager 25B of a linkage service list request (step S52). The agent 15B determines whether or not a linkage service list is acquired from the manager 25B (step S53).

In a case of acquiring the linkage service list (step S53: Yes), the agent 15B displays the linkage service list on the display unit 13 (step S54). The agent 15B determines whether or not a service selection operation for the target data is detected (step S55). In a case of detecting the service selection operation (step S55: Yes), the agent 15B notifies the manager 25B of an isolation destination account request for the selected service (step S56).

The agent 15B determines whether or not an isolation destination account is acquired from the manager 25B (step S57). In a case of acquiring the isolation destination account (step S57: Yes), the agent 15B generates a moving instruction including the data ID and the isolation destination account of the target data (step S58).

The agent 15B notifies the storage manager 43 in the online storage 4 of the generated moving instruction (step S59). The agent 15B determines whether or not completion of the movement to the second storage 42A that is the isolation destination account of the target data is detected from the storage manager 43 (step S60).

In a case of detecting the movement completion from the storage manager 43 to the second storage 42A that is the isolation destination of the target data (step S60: Yes), the agent 15B notifies the manager 25B of a linkage start instruction of the target data (step S61).

The agent 15B determines whether or not the linkage completion is detected from the manager 25B (step S62). In a case of detecting the linkage completion from the manager 25B (step S62: Yes), the agent 15B notifies the storage manager 43 of a rewrite instruction (step S63). Note that the rewrite instruction is an instruction to rewrite the target data into the second storage 42A that is the isolation destination of the linkage completion to the first storage 41A that is the isolation source.

The agent 15B determines whether or not rewrite completion from the storage manager 43 to the first storage 41A that is the isolation source of the target data is detected (step S64). In a case of detecting the rewrite completion (step S64: Yes), the agent 15B displays the linkage completion of the target data on the display unit 13 (step S65) and ends the processing operation illustrated in FIG. 8.

In a case where the activation is not detected (step S51: No), the agent 15B ends the processing operation illustrated in FIG. 8. In a case where the linkage service list is not acquired (step S53: No), the agent 15B returns to step S53 in order to determine whether or not the linkage service list is acquired from the manager 25B. In a case where the service selection operation is not detected (step S55: No), the agent 15B returns to step S55 in order to determine whether or not the service selection operation is detected. In a case where the isolation destination account is not acquired (step S57: No), the agent 15B returns to step S57 in order to determine whether or not the isolation destination account is acquired. In a case where the movement completion is not detected (step S60: No), the agent 15B returns to step S60 in order to determine whether or not the movement completion is detected. In a case where the linkage completion is not detected (step S62: No), the agent 15B returns to step S62 in order to determine whether or not the linkage completion is detected. In a case where the rewrite completion is not detected (step S64: No), the agent 15B returns to step S64 in order to determine whether or not the rewrite completion is detected.

The agent 15B notifies the manager 25B of an isolation destination account request for requesting an account of the isolation destination of the target data being stored in the first storage 41A. As a result, the agent 15B can obtain the second storage 42A corresponding to the isolation destination account used as the isolation destination of the target data.

The agent 15B notifies the manager 25B of the moving instruction including the isolation destination account and the data ID of the target data. As a result, the agent 15B can store the target data being stored in the first storage 41A in the second storage 42A that is accessible to the terminal device 5 of the specific service.

In a case of detecting the linkage completion, the agent 15B notifies the storage manager 43 of the rewrite instruction including the data ID, the isolation destination account, and the isolation source account of linkage completion target data. As a result, the storage manager 43 rewrites the target data being stored in the second storage 42A into the first storage 41A after the linkage completion. Then, it is possible to prevent an access to the target data by the terminal device 5 of the specific service again after the linkage completion and to reduce the risk of the information leakage by the terminal device 5.

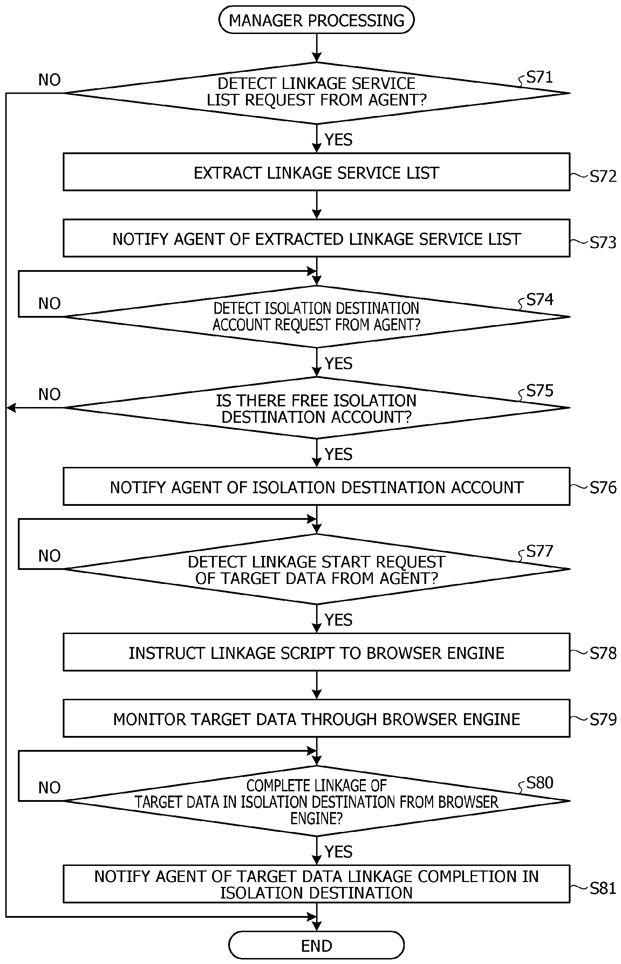

FIG. 9 is a flowchart illustrating an example of a processing operation of the manager 25B related to manager processing. In FIG. 9, the manager 25B in the second information processing device 3 determines whether or not a linkage service list request is detected from the agent 15B (step S71). In a case of detecting the linkage service list request (step S71: Yes), the manager 25B extracts a linkage service list corresponding to the user (step S72).

In a case of extracting the linkage service list corresponding to the user, the manager 25B notifies the agent 15B of the extracted linkage service list (step S73). The manager 25B determines whether or not an isolation destination account request is detected from the agent 15B (step S74).

In a case of detecting the isolation destination account request (step S74: Yes), the manager 25B determines whether or not there is a free isolation destination account (step S75). Note that it is assumed that a predetermined number of free isolation destination accounts be prepared in the isolated storage 42. In a case where there is a free isolation destination account (step S75: Yes), the manager 25B notifies the agent 15B of the free isolation destination account (step S76).

The manager 25B determines whether or not a linkage start request of the target data is detected from the agent 15B (step S77). In a case of detecting the linkage start request of the target data (step S77: Yes), the manager 25B instructs the browser engine 25A that monitors the second storage 42A that is the isolation destination of the target data to perform the linkage script (step S78).

The manager 25B monitors the target data through the browser engine 25A that monitors the second storage 42A that is the isolation destination of the target data (step S79). The manager 25B determines whether or not linkage completion of the target data in the isolation destination is detected from the browser engine 25A (step S80). In a case of detecting the linkage completion of the target data in the isolation destination (step S80: Yes), the manager 25B notifies the agent 15B of the linkage completion of the target data in the isolation destination (step S81) and ends the processing operation illustrated in FIG. 9.

Furthermore, in a case where the linkage service list request is not detected (step S71: No), the manager 25B ends the processing operation illustrated in FIG. 9. In a case where the isolation destination account request is not detected (step S74: No), the manager 25B returns to step S74 in order to determine whether or not the isolation destination account request is detected. In a case where there is no free isolation destination account (step S75: No), the manager 25B determines that there is no isolation destination, and ends the processing operation illustrated in FIG. 9. In a case where the linkage start instruction is not detected (step S77: No), the manager 25B returns to step S77 in order to determine whether or not the linkage start instruction is detected. In a case where the linkage of the target data is not completed (step S80: No), the manager 25B returns to step S80 in order to determine whether or not the linkage of the target data is completed.

When detecting the isolation destination account request from the agent 15B, the manager 25B selects a free isolation destination account, and notifies the agent 15B of the isolation destination account including the free isolation destination account. As a result, the agent 15B can obtain the second storage 42A corresponding to the isolation destination account used as the isolation destination of the target data.

In a case of detecting the linkage completion by the terminal device 5 of the specific service for the target data in the isolation destination from the browser engine 25A, the manager 25B notifies the agent 15B of the linkage completion of the target data in the isolation destination. As a result, the agent 15B can recognize the linkage completion by the terminal device 5 of the specific service.

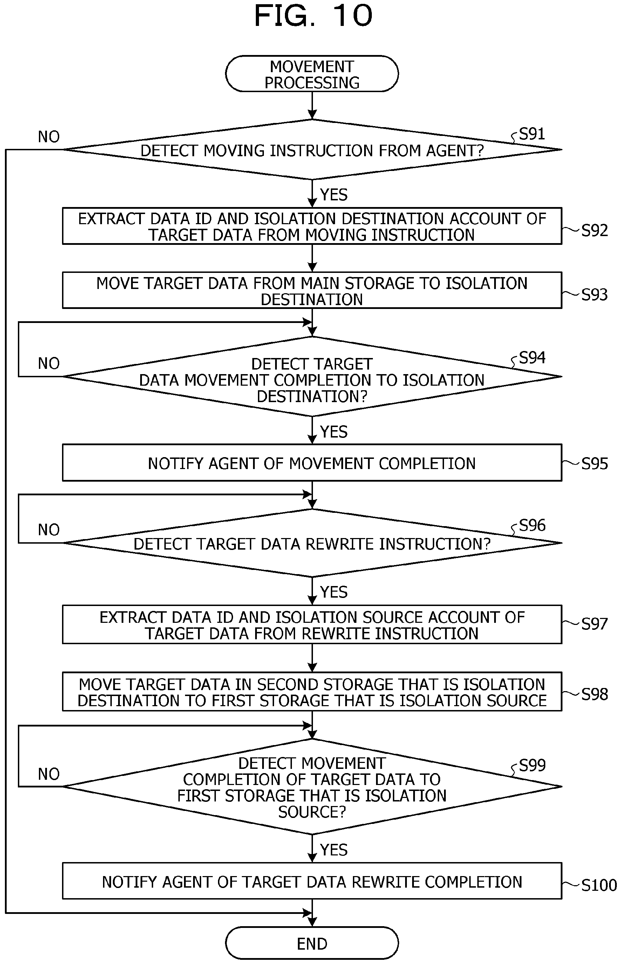

FIG. 10 is a flowchart illustrating an example of a processing operation of the storage manager 43 related to movement processing. In FIG. 10, the storage manager 43 in the online storage 4 determines whether or not the moving instruction is detected from the agent 15B (step S91). In a case of detecting the moving instruction (step S91: Yes), the storage manager 43 extracts a data ID and an isolation destination account of the target data from the moving instruction (step S92).

The storage manager 43 moves the target data in the first storage 41A in the main storage 41 to the second storage 42A that is the isolation destination in the isolated storage 42 (step S93). As a result, by moving the target data to the second storage 42A that is the isolation destination and limiting a range accessible to the terminal device 5 of the specific service to the second storage 42A of the isolation destination account consented by the user, it is possible to prevent an unauthorized access to the first storage 41A. The storage manager 43 determines whether or not the movement completion to the second storage 42A that is the isolation destination of the target data is detected (step S94). In a case of detecting the movement completion (step S94: Yes), the storage manager 43 notifies the agent 15B of the movement completion (step S95).

The storage manager 43 determines whether or not a target data rewrite instruction is detected (step S96). In a case of detecting the rewrite instruction (step S96: Yes), the storage manager 43 extracts a data ID and an isolation source account of the target data from the rewrite instruction (step S97).

The storage manager 43 moves the target data into the second storage 42A that is the isolation destination to the first storage 41A that is the isolation source, based on the extracted data ID and isolation source account (step S98). As a result, by rewriting the target data into the first storage 41A that is the isolation source, it is possible to prevent an access to the target data after the linkage completion by the terminal device 5 of the specific service. Then, the storage manager 43 determines whether or not target data movement completion to the first storage 41A that is the isolation source is detected (step S99).

In a case of detecting the target data movement completion to the storage destination before being isolated (step S99: Yes), the storage manager 43 notifies the agent 15B of the target data rewrite completion (step S100) and ends the processing operation illustrated in FIG. 10.

Furthermore, in a case where the moving instruction is not detected (step S91: No), the storage manager 43 ends the processing operation illustrated in FIG. 10. In a case where the movement completion is not detected (step S94: No), the storage manager 43 returns to step S94 in order to determine whether or not the movement completion is detected. In a case where the rewrite instruction is not detected (step S96: No), the storage manager 43 returns to step S96 in order to determine whether or not the rewrite instruction is detected. In a case where the movement completion is not detected (step S99: No), the storage manager 43 returns to step S99 in order to determine whether or not the movement completion is detected.

In a case of detecting the moving instruction including the isolation destination account and the data ID of the target data from the agent 15B, the storage manager 43 reads the target data being stored in the first storage 41A, based on the data ID. The storage manager 43 moves the read target data to the second storage 42A corresponding to the isolation destination account. As a result, the agent 15B can store the target data in the second storage 42A that is accessible to the terminal device 5 of the specific service.

The manager 25B detects the rewrite instruction including the data ID, the isolation destination account, and the isolation source account of the linkage completion target data from the agent 15B. In a case of detecting the rewrite instruction, the storage manager 43 reads target data from the second storage 42A corresponding to the isolation destination account in the rewrite instruction and rewrites the read target data into the first storage 41A corresponding to the isolation source account. As a result, by rewriting the target data being stored into the second storage 42A in the first storage 41A after the linkage completion, it is possible to prevent the target data from being accessed again by the terminal device 5 of the specific service after the linkage completion and reduce the risk of the information leakage by the terminal device 5.

Upon receiving a request for the isolation destination account in the second storage 42A from the first information processing device 2, the second information processing device 3 according to the present embodiment notifies the first information processing device 2 of the isolation destination account in the second storage 42A. The first information processing device 2 receives designation of the target data permitted to be accessed by the terminal device 5 of the specific service, among the data stored in the first storage 41A. The first information processing device 2 notifies the storage manager 43 of a moving instruction to store the designated target data in the second storage 42A corresponding to the isolation destination account in the second storage 42A notified from the second information processing device 3. When receiving the moving instruction from the first information processing device 2, the storage manager 43 stores the designated target data in the first storage 41A in the isolation destination of the second storage 42A. As a result, by limiting the range accessible to the terminal device 5 by the specific service to the target data in the second storage 42A, it is possible to reduce the risk of the information leakage due to the specific service.

The first information processing device 2 outputs an instruction, to the storage manager 43, to rewrite the target data that has been accessed by the terminal device 5, among the data stored in the second storage 42A, from the second storage 42A to the first storage 41A that is the isolation source. As a result, by rewriting the target data being stored into the second storage 42A in the first storage 41A after the linkage completion, it is possible to prevent the target data from being accessed again by the terminal device 5 of the specific service after the linkage completion and reduce the risk of the information leakage by the terminal device 5.

In the information processing system 1, the target data accessible to the terminal device 5 of the specific service is moved from the first storage 41A to the second storage 42A. As a result, a range accessible to the terminal device 5 by the specific service is limited to the target data of the second storage 42A. For example, it is assumed that the data ID of the target data placed on the online storage be a root folder. In this case, in the present embodiment, it is possible to reliably avoid a situation where data in a lower-level folder from the root folder that can be accessed by the terminal device is retrieved in order and all the pieces of data unintended by the user are accessed.

Typically, when the user makes an error in determination, even data unintended by the user is exposed to the information leakage risk. However, in the present embodiment, even if the user makes an error in determination, it is possible to minimize a range of an influence within the second storage 42A and to reduce the information leakage risk for the data unintended by the user. Moreover, by moving only the data consented by the user to the isolated storage 42 (second storage 42A), it is possible to prevent an access to the data that is not consented by the user in the online storage 4 and reduce the information leakage risk.

The first information processing device 2 receives designation of data permitted to be accessed by the terminal device 5 of the specific service, among the data stored in the first storage 41A. The first information processing device 2 outputs an instruction to store the designated data in the second storage 42A isolated from the first storage 41A. As a result, by limiting the range accessible to the terminal device 5 by the specific service to the target data in the second storage 42A, it is possible to reduce the risk of the information leakage due to the specific service.

Note that, in the information processing system 1 in the embodiment described above, a case has been described where the target data of which the access authority is given to the terminal device 5 by the specific service according to the consent operation of the user, among the data in the online storage 4, is designated. However, the literacy of the user largely depends on the designation of the target data. Therefore, on a side of a company to which the user belongs, a policy function for limiting the range of the target data consented to the user may be provided, and an embodiment thereof will be described below.

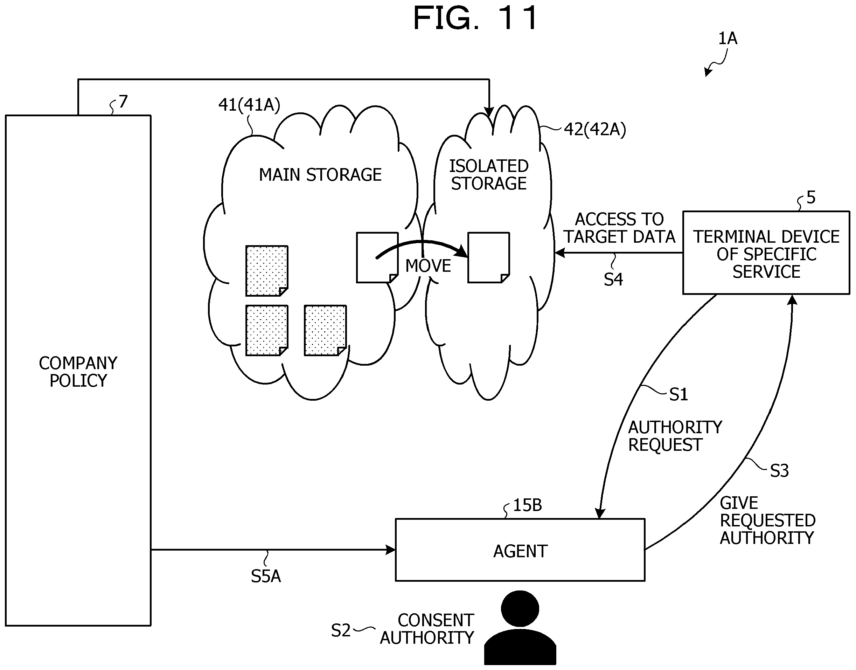

FIG. 11 is an explanatory diagram illustrating an example of an operation of an entire information processing system 1A according to another embodiment. Note that description of overlapping configurations and operations is omitted by denoting the same configurations with reference numerals same as those of the information processing system 1 illustrated in FIG. 1. A difference between the information processing system 1A illustrated in FIG. 11 and the information processing system 1 illustrated in FIG. 1 is that a condition when the authority request to the first information processing device 2 of the user is consented by the terminal device 5 of the specific service is included in a company policy 7, in addition to the literacy of the user. The company policy 7 is a table for managing policy conditions for giving an access authority on the side of the company to which the user belongs. It is assumed that the policy condition in the company policy 7 set five-stage security levels from a level 1 to a level 5 to data in the online storage 4, for example. The policy condition is a condition that gives an access authority to the terminal device 5 consented by the user only for data of the level 2 or lower and prohibits to give the access authority to the terminal device 5 even if the user's consent is obtained for data of the level 3 or more. The policy condition can be appropriately changed.

In a case of detecting the authority request from the terminal device 5 of the specific service, the agent 15B in the first information processing device 2 detects a user's consent operation including the access authority, based on the literacy of the user.

In a case of detecting the consent operation, the agent 15B collates authority content in the access authority with the policy condition of the company policy 7. The authority content includes, for example, a security level of the target data, or the like. In a case where the authority content is within an allowable range of the company policy 7, for example, in a case where the security level of the target data is equal to or less than the level 2, the agent 15B transmits the access authority including the authority content to the terminal device 5 of the specific service. On the other hand, in a case where the authority content is outside the allowable range of the company policy 7, for example, in a case where the security level of the target data is equal to or more than the level 3, the agent 15B displays company policy violation on the display unit 13 without giving the access authority. As a result, the user can recognize authority range violation by seeing a warning of the authority range violation on the display unit 13. Moreover, it is possible to reduce the information leakage risk of the target data that violates the company policy, for the terminal device 5 of the specific service.

In the information processing system 1A, by limiting the literacy of the user with the company policy, it is possible to realize a linkage service between the online storage 4 and the specific service while making cooperation governance be effective.

Note that, in the present embodiment, a case has been described where the agent 15B is executed by the first information processing device 2. However, the agent 15B may be executed by a cloud and can be appropriately changed. Furthermore, a case has been described where the manager 25B and the browser engine 25A are executed by the second information processing device 3. However, the manager 25B and the browser engine 25A may be executed by a cloud and can be appropriately changed.

In addition, each of the components of each of the units illustrated in the drawings does not necessarily have to be physically configured as illustrated in the drawings. In other words, specific forms of separation and integration of each of the units are not limited to the illustrated forms, and all or some of the units may be configured by being functionally or physically separated and integrated in any unit according to various loads, use situations, and the like.

Moreover, all or any part of various processing functions performed by each device may be executed by a central processing unit (CPU), a digital signal processor (DSP), a field programmable gate array (FPGA), or the like. Furthermore, all or any part of various processing functions may be executed on a program analyzed and executed by a CPU or the like or hardware by wired logic.

The region where various types of information is stored may be configured, for example, by a read only memory (ROM), or a random access memory (RAM) such as a synchronous dynamic random access memory (SDRAM), a magnetoresistive random access memory (MRAM), or a non-volatile random access memory (NVRAM).

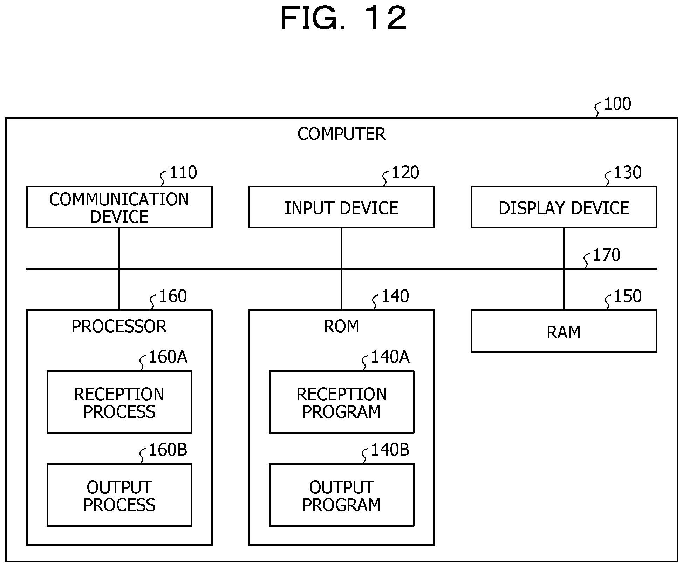

By the way, various types of processing described in the present embodiment can be implemented by executing a program prepared in advance by a processor such as a CPU in a computer. Thus, in the following, an example of a computer 100 that executes a program having functions similar to the functions of the above embodiments will be described. FIG. 12 is an explanatory diagram illustrating an example of a computer for executing a control program.

The computer 100 that executes the control program illustrated in FIG. 12 includes a communication device 110, an input device 120, a display device 130, a ROM 140, a RAM 150, a processor 160, and a bus 170. The communication device 110, the input device 120, the display device 130, the ROM 140, the RAM 150, and the processor 160 are coupled via the bus 170. The communication device 110 manages communication with a network that is coupled to the first storage and the second storage on the online storage.

Then, the ROM 140 stores the control program that implements the functions similar to those of the embodiment described above, in advance. The ROM 140 stores a reception program 140A and an output program 140B as the control programs. Note that the control program may be recorded in a computer-readable recording medium by a drive (not illustrated), not in the ROM 140. Furthermore, for example, a recording medium may be a portable recording medium such as a compact disc read only memory (CD-ROM), a digital versatile disc (DVD) disk, or a universal serial bus (USB) memory, a semiconductor memory such as a flash memory, or the like.

Then, the processor 160 reads the reception program 140A from the ROM 140 and causes the reception program 140A to function as a reception process 160A in the RAM 150. Moreover, the processor 160 reads the output program 140B from the ROM 140 and causes the output program 140B to function as an output process 160B in the RAM 150.

The processor 160 receives designation of data permitted to be accessed by the specific service, from among the data stored in the first storage. When receiving the designation of the data, the processor 160 outputs an instruction to store the designated data described above in the second storage isolated from the first storage described above. As a result, it is possible to reduce the information leakage risk due to the specific service.

### CITATION LIST

### PATENT DOCUMENT

Patent Document 1: Japanese Laid-open Patent Publication No. 2017-138962

### REFERENCE SIGNS LIST

information processing system

- 2: first information processing device
- 3: second information processing device
- 4: online storage
- 5: terminal device
- 15B: agent
- 25B: manager
- 41: main storage
- 41A: first storage
- 42: isolated storage
- 42A: second storage
- 43: storage manager

## Claims

1. A control method implemented by a computer, the control method comprising:
when receiving designation of data permitted to be accessed by a specific service, among data stored in a first storage, outputting an instruction to store the designated data in a second storage isolated from the first storage.

2. The control method according to claim 1, further comprising:
outputting an instruction to rewrite data that has been accessed by the specific service, among data stored in the second storage, from the second storage into the first storage that is an isolation source.

3. An information processing apparatus configured to perform processing including:
when receiving designation of data permitted to be accessed by a specific service, among data stored in a first storage, outputting an instruction to store the designated data in a second storage isolated from the first storage.

4. A control program for causing a computer to perform processing comprising:
when receiving designation of data permitted to be accessed by a specific service, among data stored in a first storage, outputting an instruction to store the designated data in a second storage isolated from the first storage.

5. An information processing system comprising:
a first storage configured to store data; a second storage configured to be isolated from the first storage; a first information processing device configured to be accessible to the data stored in the first storage; and a second information processing device configured to manage the second storage, wherein
the second information processing device
notifies the first information processing device of the second storage that is an isolation destination, when receiving a request for the second storage that is the isolation destination from the first information processing device, and
the first information processing device
outputs an instruction to store the designated data in the second storage that is the isolation destination notified from the second information processing device, when receiving designation of data permitted to be accessed by a specific service, among the data stored in the first storage.

6. The information processing system according to claim 5, further comprising:
a third information processing device configured to manage the first storage and the second storage, wherein
the first information processing device
outputs an instruction to store the designated data in the second storage that is the isolation destination notified from the second information processing device to the third information processing device, and
the third information processing device
stores the designated data to be stored in the first storage in the second storage that is the isolation destination, when receiving the instruction from the first information processing device.

7. The information processing system according to claim 6, wherein
the first information processing device
outputs a rewrite instruction to rewrite data that has been accessed by a specific service, among the data stored in the second storage, from the second storage into the first storage that is an isolation source, and
the third information processing device
stores the data that has been accessed and to be stored in the second storage in the first storage that is the isolation source when receiving the rewrite instruction from the first information processing device.
